# EUROPEAN PATENT SPECIFICATION

(11) **EP 2 206 941 B1**
(45) Date of publication and mention of the grant of the patent: **22.04.2015**
(21) Application number: 09000076.1
(22) Date of filing: 07.01.2009
(51) Int. Cl.: F16K 31/06, F04B 53/10, F01L 9/04

(54) **Actuated valve**
Betätigtes Ventil
Soupape actionnée

(43) Date of publication of application: 14.07.2010
(60) Divisional application: 14196897.4
(73) Proprietor: Danfoss Power Solutions Aps, 6430 Nordborg (DK)
(72) Inventor: Kuttler, Onno, Cousland/Dalkeith EH22 2PD (GB)
(74) Representative: Nestler, Jan Hendrik

(56) References cited:
- FR-A- 2 778 784
- US-A1- 2005 067 596
- US-A1- 2007 272 890

## Description

The invention relates to an actuated valve, in particular to an actuated valve for a fluid working machine. The invention also relates to a fluid working machine, comprising such an actuated valve. Furthermore, the invention relates to a process for controlling the actuated valves of a fluid working machine.

When a fluid inlet port, a fluid outlet port or an internal fluid port of a device has to be opened, closed or regulated in an automated way and/or in response to an external signal, actuated valves are the appropriate device for dealing with this task.

Such actuated valves are widely used, e.g. in engines of motor vehicles, where the actuation signal is normally applied by mechanical transmission using a camshaft. However, the use of actuated valves is not restricted to engines. In the meantime, for example, actuated valves are also used in fluid working machines, such as in hydraulic motors and particularly in hydraulic pumps.

A relatively new approach for building hydraulic machines (i.e. hydraulic pumps and/or hydraulic motors) are the so called synthetically commutated hydraulic pumps, also known as digital displacement pumps. They are a unique subset of variable hydraulic machines. One of the major advantages of synthetically commutated hydraulic machines is their energy efficiency, as well as their ability to quickly adapt to rapidly changing hydraulic fluid flow demands.

The difference between a synthetically commutated hydraulic pump and a standard hydraulic pump basically lies in the replacement of the normally passive fluid inlet valve(s), fluidly connecting the hydraulic fluid inlet manifold to the pump's cyclically changing pumping cavity, by actively controlled actuated valves. For performing a pumping function, it is sufficient to replace the passive low-pressure fluid inlet valves by actuated valves, while the high pressure valves may continue to be passive valves.

A synthetically commutated hydraulic pump can be operated in a full stroke pumping mode, a part stroke pumping mode and an idle mode:

In the full stroke-pumping mode, the actuated fluid inlet valves are controlled in a way, similar to the opening and closing behaviour of passive valves that are opening and closing under the pressure differences caused by the fluid flow.

In the idle mode, the actuated fluid inlet valves remain open throughout the whole pumping cycle. During the expansion phase of the hydraulic pump's pumping cavity, hydraulic fluid is sucked into the pump's expanding pumping cavity. When the pumping cavity eventually starts to contract, the hydraulic fluid is ejected through the still open orifice of the fluid inlet valve back towards the pump's low pressure side.

In the part stroke pumping mode, the actuated fluid inlet valve initially remains open, when the contracting cycle of the pumping cavity starts. Therefore, the hydraulic fluid is initially ejected back towards the low pressure side of the pump. At a certain point during this contraction phase, however, the actuated fluid inlet valve will be closed by a signal of the hydraulic pump's controller. Starting at this point, the way back to the low pressure side is blocked for the fraction of the hydraulic fluid still remaining within the pump's pumping cavity. Consequently, the fluid will now be ejected towards the high pressure side of the hydraulic pump. Due to this "late closing" of the fluid inlet valve, only a fraction of the pump's total cavity volume is used for "effective" pumping, i.e. for pumping towards the high pressure sidle. Therefore, the pumping performance can be adapted to the actual need for hydraulic fluid. This adaption can be done extremely fast. Normally the fluid output flow can be changed from one pumping cycle to the next.

Although the working principle of synthetically commutated hydraulic pumps has been described with reference to a single piston pump, a synthetically commutated hydraulic pump can be constructed with a plurality of cylinders as well.

Furthermore, if the passive high pressure valves are also replaced by actuated valves, a motoring mode can be implemented by a corresponding actuation of the high pressure valves and low pressure valves as well. This motoring mode cannot only be performed in a full stroke motoring mode, but also in a part stroke motoring mode, if the fluid inlet valves and the fluid outlet valves are actuated during the contraction phase and/or expansion phase of the hydraulic pump's cavity.

Particularly the part stroke pumping mode necessitates an exact timing of the opening and/or closing movements of the valves. Furthermore, the time to open and/or to close the valves has to be very fast. In particular, the speed of the opening and/or the closing movement of the valves has to be higher as compared to existing pumps, and the timing has to be more accurate.

Another aspect of the use of actuated valves in synthetically commutated hydraulic pumps is that the actuated valve has to be actuated periodically (usually one opening and one closing movement during a turn of the synthetically commutated hydraulic pump's crankshaft), so that the actuated valves have to operate fast, precisely and very often. This necessitates a totally different design of the presently discussed actuated valves as compared to actuated valves, being used in other technical fields, for example in the context of safety shutoff valves or the like.

In existing hydraulic pumps, the opening and the closing of the valves takes place solely at the top dead centre (TDC) and the bottom dead centre (BDC) of the piston. At these points, the velocity of the fluid, flowing through the valve's orifice is zero, or is at least close to zero in practical embodiments.

In the synthetically commutated hydraulic machine concept, however, at least part of the opening and/or closing movement of the valve takes place somewhere between the TDC and BDC of the piston, where the velocity of the fluid passing through the valve's orifice can be substantial. Hence, even a small deviation of the actual closing time as compared to the desired closing time can result in a substantial deviation of the actual fluid output flow rate as compared to the currently required fluid flow rate. Furthermore, due to the high fluid velocity, a slow closing action of an actuated valve can lead to undesired noise and even to cavitation effects, resulting in an increased wear and a potential damage of the valve and the valve seat.

Because of these very stringent requirements, the use of electrical energy to actuate the actuated valves has evolved to become the only design of actuated valves for fluid working machines, particularly for synthetically commutated hydraulic machines, ever to be realized. In the so far realized versions of the actuated valves, the electrical controlling signal is fed into a magnetic coil, generating a magnetic field, depending on the amount of the applied electric current. The thus generated magnetic field interacts with a ferromagnetic part of the actuated valve, resulting in a net force. Due to the basic design features of hydraulic fluid working machines, particularly of synthetically commutated hydraulic machines, the actuated valves can take advantage of the fact that the valves remain either in their open and/or their closed state for most of the time of the working cycle of the fluid working machine. Therefore, the current design of actuated valves for fluid working machines generally shows two "stable" positions of the actuated valve, i.e. the open position and the closed position of the actuated valve. In other words, in one of the end positions of the actuated valve, the valve head will "snap" into the respective end position and stay in this position, as long as no external force is applied (this is usually done by so-called magnetic latching). As a consequence, an external controlling signal has to be applied only during a reduced fraction of the overall working cycle of the fluid working machine. Therefore, the energy consumption for driving the actuated valves can be kept very low. As a side effect, the wear of actuated valves can be reduced as well. Another, different end position of the valve is realized in current designs by essentially completely relying on the existence of external forces, which act on the valve head. As an example, the closed position of current actuated valve designs is usually maintained by fluid pressure differences on both sides of the valve head. This way, another significant amount of electrical energy can be saved for holding the actuated valve in its closed position.

To even further save energy for the actuation of the actuated valves, in current designs only the closing movement of the actuated valve is initiated by applying an external electrical signal. This is done, because electrical energy is precious, particularly in the field of mobile applications, where the electrical energy has to be provided by a generator, lowering the usable power output of the engine of the vehicle. Moreover, due to the fact that the number of electrical consumers is constantly rising over the years in mobile applications, a unit using less electrical energy is more than welcome. The opening movement of the actuated valve, on the other hand, is intrinsically initiated by pressure differences, when the volume of the working chamber of the fluid working machine expands. Thus, even more electrical energy can be saved.

A very evolved example of such an electrically actuated valve for fluid working machines can be found in US 2005/0067596 A1. Although this design works in principle, it still suffers from serious drawbacks. One problem is the very high demand of electrical energy to move the actuated valve into its closed position. Another drawback is the permanent magnet, In the actual design, currently realized by the inventors of US 2005/0067596 A1, the permanent magnet consists of NeFeB. These permanent magnets are known to have a limited temperature range and are susceptible to brittle. This is problematic in the context of the continuous contact impacts at the end of the reopening movement of the valve. Furthermore, the long term behaviour of the magnet in this design, when its magnetic field is repetitively cancelled by the smaller magnetic coil remains an open question. Also, recycling of the valve actuator might prove to be problematic.

In WO 2008/012586 A1, a cooling system of a transmission system having said cooling system integrated therewith is disclosed. In part of the described embodiments, the use of a normally closed solenoid opened valve is suggested. However, the described normally closed solenoid opened valve is not designed in a way that the closing movement of the normally closed solenoid opened valve can be initiated essentially or solely based on switching off the magnetic field of the described normally closed solenoid opened valve. In particular, the actual position of the described normally closed sole-noid opened valve (opened and/or closed) depend heavily on the fluid, flowing around the valve head of the described normally closed solenoid opened valve.

In the French patent application FR 2 778 784 A1 a method for actuating an electrically actuated valve is described, wherein the electrically actuated valve comprises a valve part that is biased into a first position by a spring and that can be displaced towards a second position by a magnetic field, generated by a coil. The coil is cyclically supplied by an electric current, whose length equals at least the time of movement of the valve part from the first biased position into the second displaced position, wherein the intensity of said electric current is at least partially reduced a certain time span before the valve part reaches the second position. This way, the impact shock is reduced.

The object of the present invention is to provide for an improved actuated valve, which is particularly suited for fluid working machines, preferably for synthetically commutated hydraulic machines. Another object of the invention is to provide for an improved fluid working machine, particularly for an improved synthetically commutated hydraulic machine. Yet another object of the invention is to provide for an improved process for controlling the actuated valves of a fluid working machine, in particular of a synthetically commutated hydraulic machine.

It is suggested to design an actuated valve, in particular an actuated valve for a fluid working machine, preferably an actuated valve for a synthetically commutated hydraulic machine that comprises at least one magnetic field generating device for actuating a valve member of the actuated valve in a way that said actuated valve is designed and arranged in a way that the actuated valve is cyclically actuated, wherein the closing movement of said valve member is at least in part initiated by tuning down and/or by switching off said magnetic field generating device. Furthermore, at least one closing accelerating means is provided, wherein at least one of said valve closing accelerating means comprises at least one mechanical energy-storing unit and at least one driving circuit, said driving circuit comprising at least one short-circuiting device and at least one actively controlled regulating device for applying a voltage for cancelling the magnetic field of the magnetic field generating device, or at least one short-circuiting device (44) for cancelling the magnetic field of the magnetic field generating device and an electrical energy-regenerating device (46), or at least one short-circuiting device (44) and at least one actively controlled regulating device for applying a voltage for cancelling the magnetic field of the magnetic field generating device and an electrical energy-regenerating device (46). By designing the actuated valve in a way, totally different from the generally accepted way of designing actuated valves and thus escaping from the present paradigm of designing actuated valves, the inventors have surprisingly discovered that the proposed design yields better results than the present actuated valves. Admittedly, the magnetic field generating device is switched on for substantially longer time as compared to present designs of actuated valves. However, during this time the current which is necessary to hold the valve open is usually comparatively low. To initiate a reopening of the valve, usually a relatively high current is required. But this current can be reduced (e.g. by pulse width modulation) as soon as the magnetic gap in the solenoid is reduced or (essentially) closed. The valve can be held open with very small electrical currents because in the open position the solenoid's magnetic circuit is very efficient and can act against relatively high forces with very little electrical current. On the other hand, present designs of actuated valves usually need a very high current to actuate a change in the state of the actuated valve, particularly when changing from its open to its closed state. This is particularly due to fact that in current designs, the accelerating magnetic coil and the corresponding force generating part of the valve are separated by a relatively large distance. Because the magnetic field, generated by the magnetic coil, decays rapidly with increasing distance, the magnetic field, necessary to accelerate the valve's head in the very beginning of its movement, is very large in present actuated valve designs. Due to this very high electric current demand for the actuation of the actuated valve, the overall electrical energy consumption of present actuated valve designs is usually substantially larger as compared to the proposed design, despite of the very short time span, during which the electric current is applied. Apart from the usually lower overall power consumption of the newly proposed design, other advantages can be achieved as well. For example, the problem of inducing a very large current in the magnetic coil in a very short time, which is a major problem in current actuated valve designs, can be largely avoided. In addition, a better timing of the actuated valve can be achieved. Another advantageous aspect of the suggested actuated valve is that a comparatively fast closing of the actuated valve can be achieved. Furthermore, due to the fact that the electric current, going through the conducting wire of the magnetic coil is usually much lower in the newly proposed design, the magnetic coils can be built smaller, with less weight and at reduced cost. Also, the problems involved with overdriving the magnetic coil, which is normally done in present designs of actuated valves, can be avoided as well. It has to be noted that the newly proposed design usually will not create any special problems during the opening movement of the suggested actuated valve. This is because of the fact that the opening movement of the actuated valve will normally be assisted (or even performed) by the pressure differences, induced by the periodically expanding and contracting pumping cavity of the fluid working machine.

Preferably, the magnetic field generating device comprises at least one magnetic coil. A magnetic coil is the standard design for a magnetic field generating device. This design usually proves to be reliable, relatively cheap and to provide sufficiently strong magnetic fields. Furthermore, the magnetic field, produced by such a magnetic coil can be changed easily. One or more of the magnetic coils (and even other types of magnetic field generating devices) can comprise a magnetic core and/or a magnetic yoke, which preferably comprises soft magnetic materials like iron.

It should also be noted that instead of a magnetic field generating device, it is also possible to use a general force generating device, i.e. it is possible to use a device which is driven and/or whose working principle is based on a different form of energy. For example, a force-generating device, using pressurized fluids as an additional and/or alternative energy form could be used. This generalization is expressly included into the contents of this application and it shall be possible to set up a claim (including an independent claim) based on this generalization.

Another embodiment of the presently suggested actuated valve can be achieved if said actuated valve comprises a closing biasing means, biasing said valve into its closed position. This way, it is possible to achieve a positively closed state of the actuated valve. In particular, this way it is possible to design the actuated valve in a way that it can be essentially independent of external influences, like fluid, flowing around the valve head of the actuated valve. As a closing biasing means, a mechanical force generating device like a spring, a metal spring, an elastic material, rubber, a hydraulic energy storage device and/or a gas pressure element can be used. Preferably, the force of the closing biasing means is designed to be relatively high. As an example, in the case of a (coil) spring, this can be achieved by using a spring with an appropriate spring constant.

A preferred embodiment of the actuated valve can be achieved, if said actuated valve comprises at least one mechanical energy-storing unit. Using such a mechanical energy-storing unit it is possible.to provide for the energy, eventually needed to actuate the valve and/or to accelerate the actuation of the actuated valve over an elongated time. Additionally or alternatively, it is possible to store energy that is taken from the actuated valve itself during certain phases of the working cycle of the valve actuator.

Preferably the actuated valve is designed and arranged in a way that the energy, stored in said at least one mechanical energy storing unit is used for opening and/or closing said actuated valve. As an example, energy can be taken from the valve head during its opening movement. This energy can be set free during the opening/closing movement of the actuated valve, for example to shorten the closing time of the actuated valve. The energy, accumulated within the mechanical energy-storage means, can be released quickly at the desired time. It is usually particularly advantageous, if a preferably large fraction of the mechanical energy, stored in the mechanical energy-storage means, is released in the very beginning of the movement of the valve head. This way, it is possible to make the response of the valve head to the closing signal even faster.

Said mechanical energy-storage means can comprise at least one device taken from the group containing springs, metal springs, elastic material, rubber, hydraulic energy storage devices and gas pressure elements. Using one or several of these devices usually results in a cheap and reliable device, showing good performance. Particularly when using a spring (e.g. a coil spring), it is also possible to design the device in a way that it shows a non-linear connection between exerted force and distance of deformation. Thus the device can be even better optimized for its purpose. With an adapted connection between exerted force and distance of deformation it is possible, for example, to provide for a zero pumping rate of a hydraulic working machine, in case the controller, and/or the energy supply for driving the actuated valve fails. On the other hand it is also possible to provide for a fail-safe mode, providing for a certain pumping rate in this case. This is particularly sensible for critical applications, e.g. for a power steering or the like. This possible adaptation to the needs of an individual application is even an improvement over the currently existing actuated valve designs.

Another embodiment of the actuated valve can be achieved, if said actuated valve comprises a preloading means for preloading said mechanical energy-storing unit. While it is possible that the mechanical energy-storing unit is preloaded e.g. by the valve head itself during certain phases of the working cycle of the valve, it is preferred that preloading of the mechanical energy-storing unit is done at least in part by a separate component. This does not necessarily mean that the preloading means is a special component, provided solely for preloading the mechanical energy-storing unit. Instead, it is possible that the preloading means serves an additional purpose as well. For instance, a magnetic coil (or a different device) could be provided, which serves as a preloading means, as well as a holding device which can hold the valve in its open state. However, the different purposes of such a device will usually be served at different times. The preloading means can use any energy form. However, experiments have shown that particularly for using the valve actuator in connection with hydraulic fluid working machines, preferably in connection with synthetically commutated hydraulic machines, electrical energy and pressure energy (e.g. provided by a pressurized hydraulic fluid) usually shows the best results. Using electrical energy for driving the preloading means, a magnetic field generating device, preferably a magnetic coil can be used to generate a force to preload the mechanical energy-storing unit.

Yet another embodiment is possible, if said actuated valve is designed in such a way that it comprises at least one second magnetic field generating device, wherein preferably said second magnetic field generating device is designed and arranged as said preloading device. Using such a plurality of magnetic field generating devices, it is possible to optimize the respective magnetic field generating devices better for their intended purposes. It is even possible that for each purpose one and/or even several magnetic field generating devices are provided. When using a plurality of magnetic field generating devices, it is usually also possible to design the resulting magnetic field generating devices smaller, lighter, more cost effective and/or less power consuming.

It is also possible to design the actuated valve in a way that it comprises at least one fluidly driven actuating device, wherein preferably said fluidly driven actuating device is designed and arranged as said preloading device. It has to be noted that in several applications, there is a return flow of a fluid at a still elevated pressure. This pressure can hence be used to perform useful work, instead of being simply dumped into a storage tank at ambient pressure. An example of such a system is a power steering. This way, the design of the resulting arrangement can be simplified and energy can be conserved.

Although it is in principle possible that said closing accelerating means and said closing biasing means fall at least partially together, it is preferred to design said means as separate devices. This way, the respective means can be better optimized for their intended purpose.

When switching off or turning down a magnetic field generating device, particularly a magnetic coil, the energy stored in the magnetic field will usually generate a current, and hence a voltage, which intends to maintain the magnetic field. This effect has to be dealt with in the current actuated valve design. In particular, the generation of sparks or otherwise harmful voltages has to be avoided. A possible short-circuiting device could be a Zener diode, a diac, a triac, a thyristor, a varistor, a capacitor and/or e.g. the MOSFET breakdown. It is also possible to provide an electric circuit that actively "fights" the electric current, induced by the magnetic field generating device. This way, the cancellation of the magnetic field of the magnetic field generating device can be performed faster and/or more accurate Yet another design is possible by providing a device, which regenerates the electrical energy, and hence the energy stored within the magnetic field of the magnetic field generating device. The energy can be used for preloading the preloading device or even for other purposes, like for charging a battery of the device, the actuated valve is used for. The respective device can be preferably included into the actuated valve, or provided in a separate place. Of course, it is also possible to split up the device in several sub-devices. The sub-devices can once again be provided in the actuated valve and/or in separate places and/or some of the sub-devices can be provided in the actuated valve, while some other of the sub-devices can be provided in separate places.

Furthermore, a fluid working machine is suggested, whereas the fluid working machine is provided with at least one valve according to the preceding description. The notion "fluid working machines" comprises in particular fluid pumps, fluid motors, hydraulic pumps, hydraulic motors, pressurized gas pumps, pressurized gas motors and combinations thereof. The resulting device can be modified similarly to the already given description and will show the already mentioned effects and advantages in a similar way.

It is also suggested to design the fluid working machine at least partially as a synthetically commutated hydraulic machine. Especially for synthetically commutated hydraulic machines, the above mentioned actuated valves are especially well suited. Particularly synthetically commutated hydraulic machines (pumps, motors and combinations thereof) need very fast and accurately actuated valves for proper function. However, this can be assured with a design as proposed above. As already mentioned, synthetically commutated hydraulic pumps are also known as digital displacement pumps. In this context an additional statement about the functionality of a valve actuator used in a synthetically commutated hydraulic machine should be made. For this it is necessary to understand the pumping cycle of a synthetically commutated hydraulic machine; so some additional comments are made in the following. Usually, as soon as the inlet valve is closed during the exhaust stroke pressure builds up and holds the inlet valve closed. The actuator of the valve usually only has to close the inlet valve initially - once closed it is usually held closed, at least in part, by the pressure in the pumping chamber and can usually only open after top dead centre, when the pressure has decreased again.

Additionally it is proposed to design the fluid working machine in a way that said actuated valves are used at least in part as low pressure valves. The design of the actuated valves, described above, is especially well suited for this purpose. Especially the low-pressure valves have to have very large cross sections for the passing fluid to keep pressure losses of the throughgoing fluid low. These pressure losses are particularly problematic for low-pressure pressure valves, because due to the low absolute pressure, relatively small pressure losses can amount to a quite large percentage of the relative pressure loss.

Furthermore a process for controlling the actuated valves of a fluid working machine, in particular of a synthetically commutated hydraulic machine, preferably of a fluid working machine according to the preceding description is suggested, in which the closing movement of at least one of said actuated valves is performed by turning down and/or switching off the force of at least one force generating device of said actuated valves. It is suggested to perform the process in a way that the energy stored in said force generating device is at least in part actively tuned down and/or switched off. The fluid working machine, actuated in this way, will show the same features and advantages as already described above in an analogous way. Furthermore, the process can be modified in the sense of the above description of actuated valves and/or fluid working machines, as well.

In particular it is possible to perform the process in a way that at least one of said force generating devices is designed and arranged as a magnetic field generating device, in particular as a magnetic coil.

Furthermore, the process can be modified in that the energy stored in said force generating device is at least partially dissipated and/or regenerated for performing the closing movement of said actuated valve.

Further advantages, features, and objects of the invention will be apparent from the following detailed description of the invention in connection with the associated drawings. The drawings show:
Fig. 1: a first embodiment of an actuated valve in a schematic cross section;
Fig. 2: a schematic graph of a possible actuation pattern, for an actuated valve;
Fig. 3: a schematic drawing of a synthetically commutated hydraulic pump, comprising an actuated valve as shown in Fig. 1;
Fig. 4: a schematic drawing of an electronic circuit for driving an actuated valve;
Fig. 5: a valve actuator of a second embodiment of an actuated valve in a schematic cross section;
Fig. 6: a third embodiment of an actuated valve in a schematic cross section in different position.

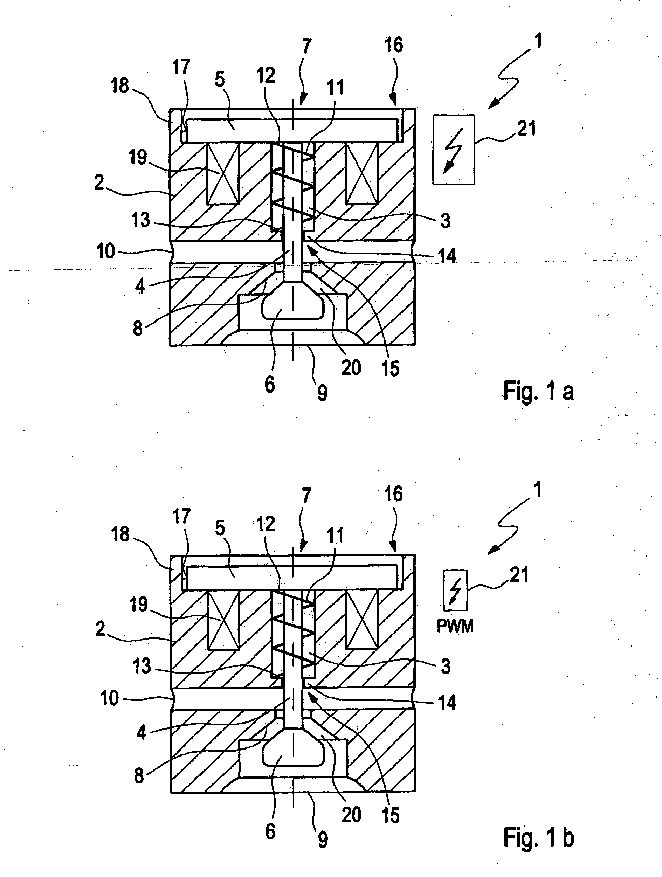

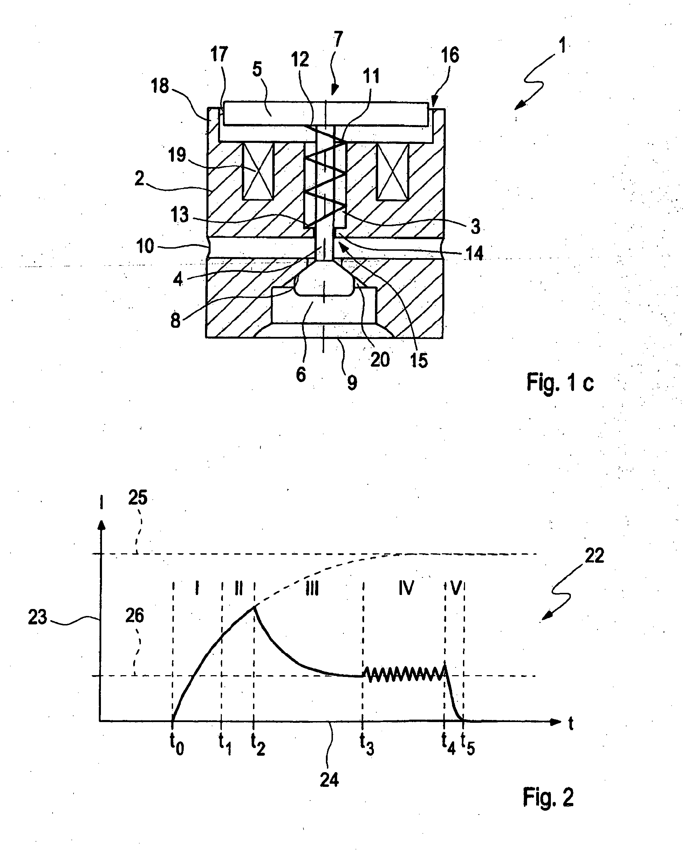

In Fig. 1, a possible design of a normally closed actuated valve 1 is shown in a schematic cross section. The three different sketches of Fig. 1 (Fig. 1 a to Fig. 1c) show the normally closed actuated valve 1 in several different states and/or positions. The different states will be described in more detail in the following.

The normally closed actuated valve 1 as shown in Fig. 1, will usually be designed in an essentially rotationally symmetric way. However, different forms are also possible, like a rectangular or a quadratic shape.

The normally closed actuated valve 1 comprises a valve body 2, having several openings. In the center of the valve body, a central bore 3 is provided. The central bore 3 is designed in an axial direction of the normally closed actuated valve 1. Within the central bore 3, a valve stem 4, connecting a plate shaped actuation disc 5 to a valve head 6 is arranged. The valve stem 4, the plate shaped actuation disc 5 and the valve head 6 are fixedly connected together, thus forming a movable valve unit 7. The movable valve unit 7 can be moved in an axial direction of the normally closed actuated valve 1, so that the valve head 6 can be placed in contact with the valve seat part 8 of the normally closed actuated valve 1, or be arranged at a certain distance from the valve seat 8 (valve slit 20 is open). This way, the normally closed actuated valve 1 can be opened (a fluid connection between the cylinder port 9 and the low pressure fluid port 10 is established; see Fig. 1a) or closed (the fluid connection between the cylinder port 9 and the low pressure fluid port 10 is disconnected; see Fig. 1c). Furthermore, in the central bore 3 of the valve body 2, a coilly wound 11 metal spring is located. The metal spring 11 contacts on a first side 12 the actuation disc 5, and on a second side 13 (opposing the first side 12) projections 14, which are connected to the body 2 and project slightly into the central bore 3. In the embodiment shown, the projections 14 are arranged in a way that they are forming a first bearing 15 for the valve stem 4. A second bearing 16 for the movable valve unit 7 is provided by interaction of the radial surface 17 of the actuation disc 5 and an inner surface, formed by an axially projecting ring 18, which can be a part of the valve body 2.

The normally closed actuated valve 1 is constructed in a way that the metal spring 11 pushes the movable valve unit 7 into its closed position (i.e. the valve head 6 contacts the valve seat 8 ; see Fig. 1 c). This is done e.g. by an appropriate dimensioning of the metal spring 11 and the length of the central bore 3 and by choosing an appropriate spring constant for the metal spring 11. In particular, the closing force of the metal spring 11 is chosen in a way that fluid, flowing past the valve head 6 through the valve seat 8 of the normally closed actuated valve 1 does not influence the position of the valve head 6, so that consequently the valve slit 20 is not influenced by hydraulic fluid, flowing through the normally closed actuated valve 1. As an exception to this, the normally closed actuated valve 1 will be opened during the expansion phase of the cyclically changing cavity 32, when the fluid pressure on the cylinder port side 9 of the valve head 6 is significantly lower as the fluid pressure on the low pressure fluid port side 10 of the valve head 6. Thus, the normal state of the normally closed actuated valve 1 corresponds to the situation, as shown in Fig. 1c (the electrical coils 19 are essentially not energized).

If the normally closed actuated valve 1 has to be opened, electrical coils 19, which are provided within the valve body 2 of the normally closed actuated valve 1 are supplied by an electric current. The electrical coils 19 will generate a magnetic field that will interact with the actuation disc 5, generating an attractive force between the electrical coils 19 and the plate shaped actuation disc 5. Hence, the plate shaped actuation disc 5 is at least in part made from a ferromagnetic material (for example steel).

Due to the characteristics of the magnetic field, generated by the electrical coils 19, the strength of the attractive force will rapidly decay with an increasing distance between the actuation disc 5 and the electrical coils 19. Therefore, a relatively large electrical current is needed, to initiate the movement of the movable valve unit 7 from its closed position, as shown in Fig. 1c, into an (half way) opened position (which also necessitates to overcome the force, generated by the metal spring 11). This is symbolized by the large electric flash symbol 21 of Fig. 1a. This behavior of the electric current, needed to open the normally closed actuated valve 1 can also be seen from the graph 22, shown in Fig. 2. In the graph 22, the electrical current I (plotted along the ordinate 23) is shown over time (plotted on the abscissa 24). At t₀, an electrical voltage is applied to the electrical coils 19. As can be seen in Fig. 2, this does not mean that immediately a (saturated) electrical current is flowing through the electrical coils 19, which is sufficient to initiate the movement of the movable valve unit 7 towards the electrical coils 19. Instead, due to the inductivity of the electrical coils 19, the current I starts to slowly rise over time t. If the applied voltage would remain constant, the current I would asymptotically reach a steady state current 25, which is indicated as a dashed line in Fig. 2. To reduce the size, weight as well as the inductivity of the electrical coils 19, the electrical coils are normally set up in a way that an electrical current in the order of the steady state current 25 would destroy the electrical coils 19. This "overdriving" of the electrical coil 19 (i.e. the application of the relatively high voltage) is done, to speed up the increase of the electrical cur-, rent I within the electrical coils 19.

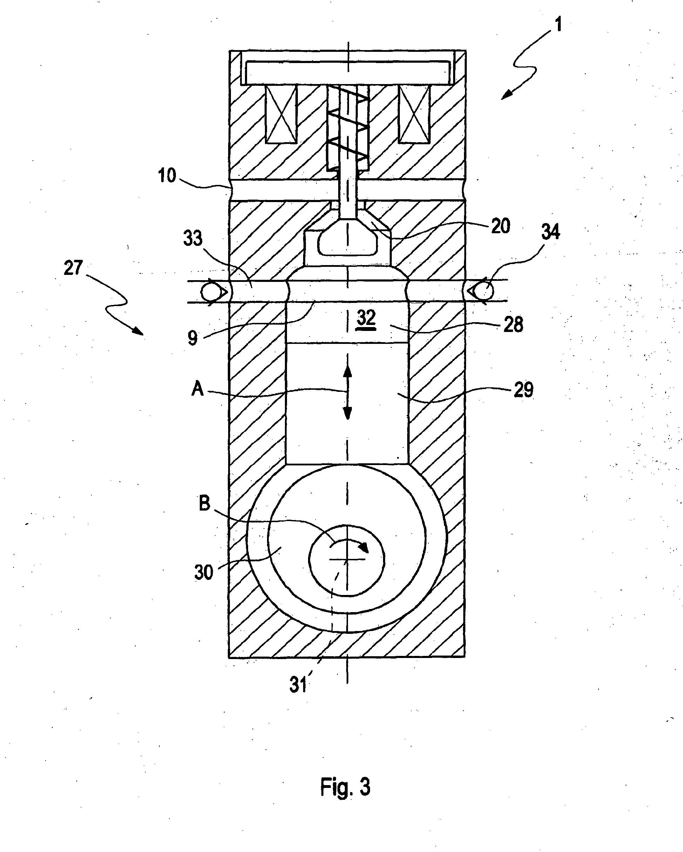

in the initial time interval I (between to and t₁; see Fig. 2), the movable valve unit 7 will remain in its closed position. However, at t₁, the attractive force of the magnetic field; generated by the electrical coils 19, will overcome the counteracting biasing force of the metal spring 11. Starting with this point in time, the movable valve unit 7 of the normally closed actuated valve 1 will move from its closed position, as shown in Fig. 1c, to its opened position, shown in Fig. 1a. It has to be noted, that a short time after the start of the movement of the movable valve unit 7, the current I will continue to rise (i.e., the full voltage is still supplied). This can be seen as some sort of a "safety margin", so that the movement of the movable valve unit 7 can be initiated, even if some non-foreseeable forces, holding the movable valve unit 7 in its closed position, are present. A possible cause for such a situation could be the presence of a pressure difference between the cylinder port 9 and the low pressure fluid port 10 of the normally closed actuated valve 1. However, at some point t₂, the applied voltage will be reduced (or even switched off, wherein a slowly decreasing electric current I will be sustained initially , due to the inductivity of the electrical coils 19), to a latching steady state holding current I_{reduced} 26, which is indicated by the dashed line 26 in Fig. 2. At that point in time t₃, this reduced latching steady-state current I_{reduced} 26 will be maintained by pulse width modulation (PWM) in the time interval IV. It has to be noted, that due to the magnetic force field characteristics of the magnetic field, generated by the electrical coils 19, a comparatively low electric current I_{reduced} is necessary, to hold the plate shaped actuation disc 5 in its latched position. This is symbolized in Fig. 1b by the small electrical flash symbol 21, which is smaller, as compared to the electrical flash symbol 21 in Fig. 1 a. : Therefore, the consumption of electrical energy of the normally closed actuated valve 1 in its latched open position is quite low, even if the length of the time interval IV is quite long. As an example, if the normally closed actuated valve 1 is used as the inlet valve of a synthetically commutated hydraulic pump 27 (see Fig. 3), a very long time interval IV can occur, if the synthetically commutated hydraulic pump 27 runs in an idle mode. Then, the normally closed actuated valve 1 will be operated in its open state (see Fig. 1 b) with reduced latching current I_{reduced} for the entire length of the idle mode.

At point t₄, the electric current I through the electrical coil 19 will be switched off. This can be done by short-circuiting electrical coil 19, by actively counteracting the electrical current I through the electrical coil 19 and/or by recuperation of the energy, stored in the magnetic field of the electrical coils 19. As can be seen, the turning-off time interval V between t₄ and t₅ is very short, as compared to the time interval I between to and t₁. Therefore, the closing movement of the normally closed actuated valve 1 can be much faster, as compared to actuated valves, presently used in a synthetically commutated hydraulic machine 27. Another advantage is the better timing of the closing movement of the normally closed actuated valve 1. This is because a relative variation of 10% (as an example) will translate into a shorter time span, if the time span of the full actuation time is shortened. The better timing of the closing movement of the normally closed actuated valve 1, however, will usually result in an improved fluid output characteristics of the synthetically commutated hydraulic pump 27. In particular, the differences between the fluid flow demand and actually pumped hydraulic fluid can be made smaller, as compared to existing synthetically commutated hydraulic pumps 27.

Of course, if the electrical current I is reduced to zero at a certain point in time interval V, the force, applied to the actuated disc 5 via the magnetic field generated by the electrical coils 19 will no longer be sufficient anymore to hold the movable valve unit 7 in its latched position (see Fig. 1b). Therefore, the movable valve unit 7 will start to move towards the closed position of the normally closed actuated valve 1 (see Fig. 1c) under the force of the metal spring 11. Starting from the position in Fig. 1c and/or somewhat after time t5 in Fig. 2, the normally closed actuated valve 1 is ready for another actuation cycle.

In Fig. 3, a possible use for the described normally closed actuated valve 1 is shown. Here, the normally closed actuated valve 1 is used as a low pressure valve for a synthetically commutated hydraulic pump 27. The cylinder port side 9 of the normally closed actuated valve 1 is fluidly connected to a cylindrical cavity 28. Inside the cylindrical cavity 28, a piston 29 is placed, which can be moved in an axial direction A, as indicated by double headed arrow A in Fig. 3. The movement of the piston 29 is initiated by a rotating crankshaft 30. The crankshaft 30 is arranged off-axis from a turning axis 31. Therefore, the rotating movement (as indicated by arrow B in Fig. 3) of the crankshaft 30 will be translated into an up-and-down movement A of the piston 29. Therefore, the cylindrical cavity 28 will show a cyclically changing volume 32.

If the piston 29 is moving downwards and the cyclically changing volume 32 is expanding, hydraulic fluid will be sucked into the volume 32 from the low pressure fluid reservoir (not shown) via low pressure fluid port 10, valve slit 20 and cylinder port 9 of the normally closed actuated valve 1, wherein the normally closed actuated valve 1 is in a (partially) open state. If the cyclically changing volume 32 is contracting, the normally closed actuated valve 1 can be either held in its opened stage or moved into its closed state.

In the open state of the actuated valve 1, the hydraulic fluid will be returned back to the low pressure fluid reservoir. Therefore, no effective pumping is performed.

If, however, the actuated valve 1 is moved to its closed position, the fluid connection to the low pressure reservoir is no longer available anymore.

Therefore, the pressure inside the cavity 32 is increasing and at some point, the pressurized hydraulic fluid will open the check valves 34 which are placed in a high pressure fluid channel 33, connecting the cyclically changing cavity 32 to a high pressure fluid manifold (not shown). Depending on the time of the closing movement of the actuated valve 1, the remaining fraction of the cavity's volume 32 can be used for effective pumping (apart from "dead" volumes). As an example, if the actuated valve 1 is closed near the bottom dead center of the piston 29, the full stroke pumping mode will result, which is equivalent to the pumping behavior of a standard hydraulic pump. If, however, the actuated valve 1 will be closed when the piston 29 is half way up between the bottom dead center at the top dead center, a fraction of 50% of the cyclically changing volume 32 is used for effective pumping.

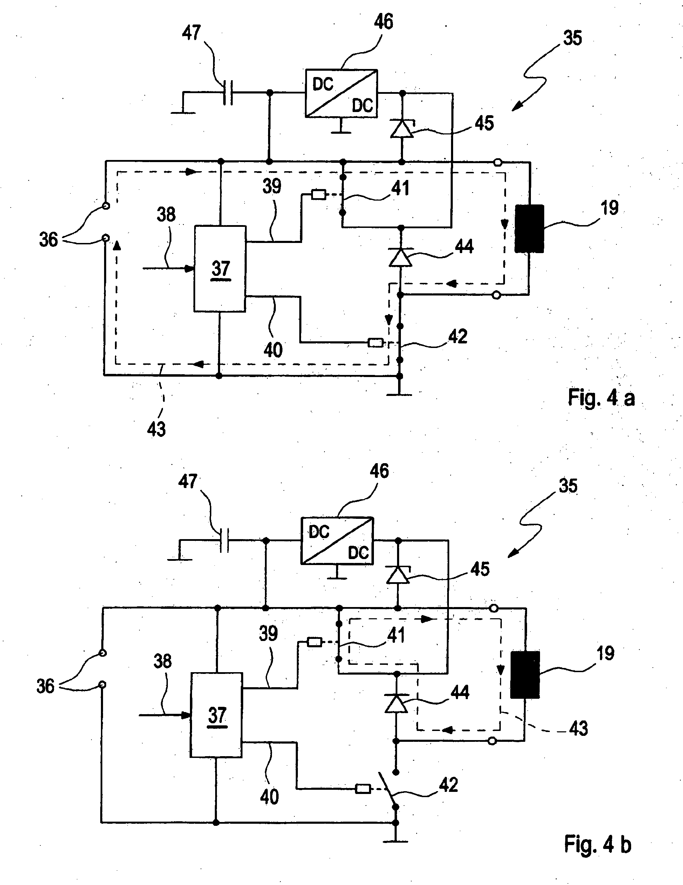

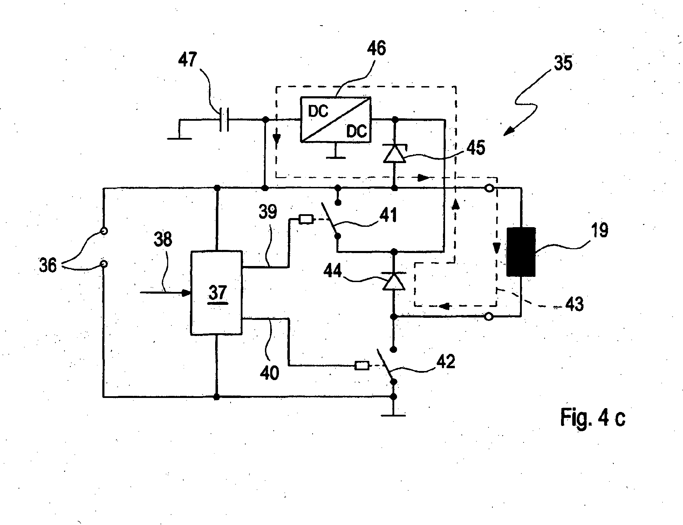

In Fig. 4, a possible embodiment of the driving circuit 35 for the actuation of the electrical coil 19 of normally closed actuated valve 1 is shown as a schematic circuit pattern. The three different drawings 4a to 4c of Fig. 4 correspond to the different phases of the actuated valve 1 in Fig. 1 and/or to different time intervals in Fig. 2.

The driving circuit 35 is electrically connected to a power supply 36, for instance the onboard electrical system of a vehicle like a wheel loader, sweeper, forklift truck or any other construction of agricultural machine. The driving circuit 35 comprises an electronic controller unit 37, which can be designed in form of a single circuit board computer. The electronic controller unit 37 comprises one or several input ports 38, through which it receives the information, on how to actuate the electrical coils 19 of the actuated valve 1. As an example, the electronic controller unit 37 could receive information about the temperature of the hydraulic oil of a synthetically commutated hydraulic pump 27, about the oil pressure in the high-pressure manifold of the synthetically commutated hydraulic pump 27, about the position and speed of the rotating crankshaft 30, about the actual fluid flow demand and the like.

These different input signals are used to generate output signals 39, 40. In the example shown, two different output signals 39, 40 are generated by the electronic controller unit 37. Of course, a different number of output signal could be generated by the electronic controller unit 37 as well.

In the presently depicted example, the two different output signals 39, 40 are used to actuate two switches 41, 42 (first switch 41, second switch 42), which are preferably designed as electronic switches.

When the movable valve unit 7 is moved from its closed position (Fig. 1 c) to its opened position (Fig. 1 a) the two switches 41, 42 are closed by the electronic controller unit 37. This situation corresponds to time interval I of Fig. 2. As can be seen, the full voltage, delivered by a power supply 36 is applied to the electrical coil 19. Therefore, the electric current I through the electrical coil 19 will increase with time (the delay is due to the inductivity of the electrical coil 19). Due to the arrangement of the free wheeling diode 44, no electrical current is running through the free wheeling diode 44 in this state of the driving circuit 35. The main current path 43 through the driving unit 35 is indicated by a dashed line 43.

As soon as time t₂ has been reached, the electrical coil 19 has to be cut off from the power supply 36, to avoid an excessive current through the electrical coil 19. This has to be done, to avoid the destruction of the electrical coil 19, because it is not designed to sustain the steady-state current 25, as previously explained. Furthermore, it is desired to conserve electrical energy and hence to lower the electric current through electrical coil 19.

In the time interval III in Fig. 2 (between t₂ and t₃), the electrical coil 19 will be decoupled from the power supply 36 by opening the second switch 42. The first switch 41, however, will remain in its closed position during time interval III. Due to the magnetic field and the inductivity of the electrical coil 19, a voltage will be induced by the electrical coil 19, which is intending to sustain the electric current through the coil 19. Therefore, the electric circuit will be closed by the free wheeling diode 44 and the closed first switch 41. The resulting main current path 43 is once again indicated by dashed line 43 in Fig. 4b.

Once the electric current through electrical coil 19 has reached its latching steady-state current 26 (see Fig. 2), the first electric switch 41 will remain closed, while the second electrical switch 42 will be periodically opened and closed. Therefore, the main current path 43 will remain to be the "short-circuited current path", as shown in Fig. 4b. However, electrical losses will be compensated by periodically closing second switch 42 for a short time. Effectively, this will result in a pulse width modulation (PWM) driving of the electrical coil 19.

In Fig. 4c, the state of the driving circuit 35 in time interval V (see Fig. 2) is shown. Here, the electronic controlling unit 37 opens both the first and the second switch 41, 42. Therefore, the main electrical current path 43 will now start from the electrical coil 19 (due to the induced electrical voltage), go through the free wheeling diode 44 and to the energy recovering unit 46. In the energy recovering unit 46, the energy, stored in the magnetic field of the electrical coil 19 will be recycled in part and stored in a buffer capacitor 47. The electrical energy, stored in the buffer capacitor 47 can be later used for increasing and/or maintaining an electric current/the magnetic field in the electrical coils 19, or for other purposes. Since the buffer capacitor 47 has to buffer a relatively high energy, a high capacity buffer capacitor (like a Gold-cap capacitor) is preferred. The Zener diode 45 in the driving circuit 35 is provided for safety reasons. In case the electrical voltage generated by the electrical coil 19 is too high, so that the energy recovering unit 46 could be damaged, the excess voltage is short-circuited by the Zener diode 45, thus preventing a damage of the energy recovering unit 46.

The energy recovering unit 46 has not only the advantage that electrical energy can be (partially) recycled. Instead, the electrical load, provided by the energy recovering unit 46 will result in a fast decrease of the electrical current through the electrical coil 19. Therefore, the length of the time interval V in Fig. 2 can be shortened.

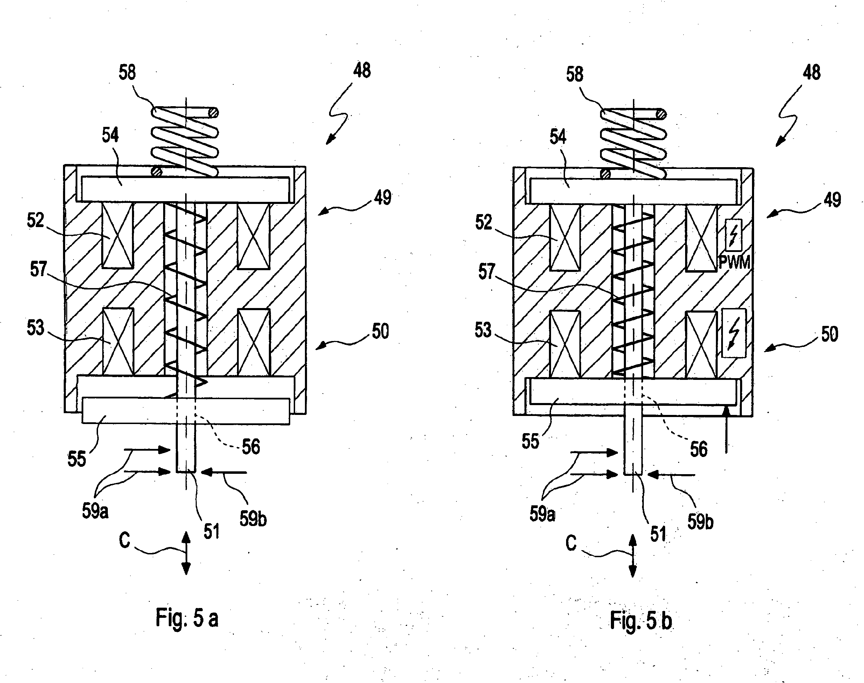

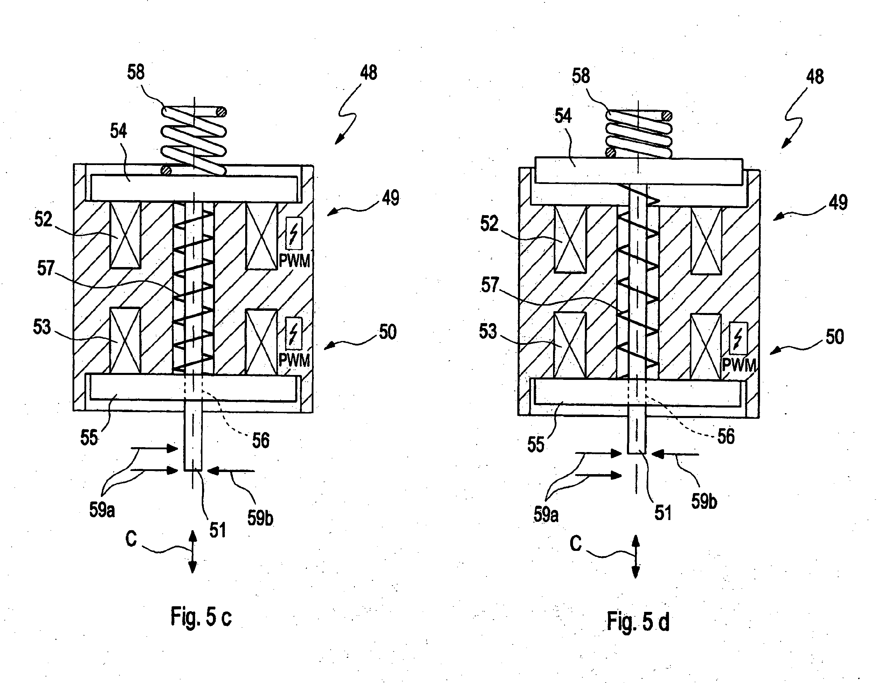

In Fig. 5 the valve actuator 48 section of a second embodiment of a normally closed valve actuator is shown in a schematic cross section. In the embodiment shown, the valve actuator 48 is designed with a rotationally symmetric shape. However, different designs are equally possible.

The valve actuator 48 comprises a driving section 49 for directly driving a valve stem and 51, which can connect to a valve head 6 (see Figs. 1 and 3).

In the embodiment, shown in Fig. 5, both the driving section 49, as well as the loading section 50 of the valve actuator 48 are electrically driven. More detailed the respective electric current for actuating the driving section 49 and the loading section 50 is fed into an appropriate electrical coil 52, 53 (driving electrical coil 52 and loading electrical coil 53) of the driving section 49 and the loading section 50, respectively. Within the electrical coil 52, 53, a magnetic field is generated, which is acting on an axially movable disc 54, 55 (driving disc 54 and loading disc 55) of the driving section 49 and the loading section 50, respectively. If an electric current is applied to one or both of the electrical coils 52, 53, the respective axially, movable disc 54, 55 experiences an attractive force towards the electrical coil 52, 53, due to the magnetic field generated by the electrical coil 52, 53.

The axially movable disc 54 of the driving section 49 is fixedly attached to the valve stem 51. Therefore, the valve stem 51 and the driving disc 54 of the driving section 49 always move together. Contrary to this, the axially movable loading disc 55 of the loading section 50 is slidingly movably connected to the valve stem 51. In other words, a hole 56 is provided in the loading disc 55 so that the valve stem 51 and the loading disc 55 can move freely against each other in an axial direction C.

Between the driving disc 54 and the loading disc 55, an energy storage spring 57 is provided. The function of the energy storage spring 57 will become clear from the following description. In the present embodiment, the energy storage spring 57 is designed as a coil spring, made of flexible steel material.

In addition to the energy storage spring 57, a biasing spring 58 is provided, which is connected to the driving disc 54. The biasing spring 58 generates a biasing force, pushing the driving disc 54, and hence the valve stem 51, in the direction of another position. If the valve actuator 48 is connected to a valve head 6 as seen in Figs. 1 or 3, this corresponds to an open position of the poppet valve. Depending on the actual use of the valve actuator 48, it is also possible that the biasing spring 58 can be omitted.

In the four sketches a through d of Fig. 5, an actuation cycle of the valve actuator 1 is illustrated.

In Fig. 1, the position of the valve stem 51 can be particularly seen from the arrows 59, drawn at the lower end of the valve stem 51. The left arrows 59a on the left side of the valve stem 51 indicate the upper and the lower position of the valve stem 51, while the right arrow 59b on the right side indicates the actual position of the valve stem 51. If the valve actuator 48 is connected to a poppet valve, similar to the situation shown in Fig. 1 or 3, this would correspond to an open position of the poppet valve.

In Fig. 5a, the valve actuator 48 is in its first position, in which the driving section 49 and the valve stem 51 are in their lower position. The driving section 49 is in the lower position, although its electrical coil 52 (driving electrical coil 52) is switched off (no electric current going through driving electrical coil 52). This is because of the pressure differences, occurring between the cylinder port 9 and the low pressure fluid port 10. Usually, the occurring fluid pressure differences are much higher as compared to the biasing force of the biasing spring 58. Therefore, the biasing forces of the biasing spring 58 are easily outweighed.

The loading electrical coil 53 of the loading section 50 is switched off as well (no electric current going through loading electrical coil 53). Therefore, the loading disc 55 of the loading section 50 will be pushed into its lower position under the influence of the energy storage spring 57. Of course, the movement of the loading disc 55 is limited by an appropriate means, for example by a limiting projection (not shown), which can be provided on the valve stem 51 and/or on the body of the valve actuator 48.

In Fig. 5b, the loading phase of the valve actuator 48 is shown. In this position, the valve stem 51 of the valve actuator 48 will remain in its lower position, so that the poppet head 6 of the poppet valve (see Figs. 1 and 3) will remain in its open position. This corresponds to a suction phase of the synthetically commutated hydraulic machine 27 (shown in Fig. 3), in which hydraulic fluid is sucked in from a low pressure reservoir into a pumping cavity 32 of cyclically changing volume.

During the lower position of the driving section 2 (open position of actuated valve 21; occurring e.g. during a suction phase of the synthetically commutated hydraulic pump 27), there is usually enough time to load the energy storage spring 57 with mechanical energy. In the present embodiment, this is done by applying an electric current to the preloading electrical coil 53 of the loading section 50. The electric current through the loading coil 53 will generate a magnetic field, which will generate an attractive force on the loading disc 55. This force is visualized by arrow D in Fig. 5b. Since the loading electrical coil 53 comprises a certain inductivity, the application of an electric voltage will cause the electric current to rise slowly over time. However, the synthetically commutated hydraulic machine 27 will remain in the suction phase for a long time as compared to the time constant of the loading electrical coil 53, even at high RPM. Therefore, there is sufficient time for the electric current to reach its desired level.

By the upward movement of the loading disc 55 (wherein the driving disc 54 will remain in its lower position), the energy storage spring 57 will be compressed, thus storing mechanical energy therein.

As can be seen from Fig. 5b, an electric current is also applied to the driving electrical coil 52 of the driving section 49. This way the driving disc 54 will be held in place. Due to the nature of the attractive force of the magnetic fields, generated by the driving electrical coil 52 and the loading electrical coil 53, a relatively small electric current is needed for holding the respective disc 54, 55 in a latched position, whereas a relatively large electric current is needed for accelerating the respective disc 54, 55 out of its distant position towards its latched position. This is indicated by the different size of the electrical flashes, drawn in Fig. 5b. A reduced electric current can be realized by pulse width modulation, which is indicated by the letters PWM in Fig. 5b (as well as in Figs. 5c and d).

In Fig. 5c, the valve actuator 48 is shown in a state, in which both the driving disc 54 and the loading disc 55 are in their latched position, i.e. the driving disc 54 is in its lower position while the loading disc 55 is in its upper position. Since both discs 54, 55 are in their latched positions, the electric current through both electrical coils 52, 53 can be reduced to a "latching level", in which the attractive force is just enough to hold the respective disc 54, 55 in its latched position. This way electrical energy can be saved which is clearly of advantage. It has to be noted that the valve actuator 28 will usually stay in the position, shown in Fig. 5c for an elongated time. Therefore, the savings in electrical energy can be substantial. The reduction in electrical current can be done by pulse width modulation, as already mentioned.

If the driving section 49 of the valve actuator 48 has to be moved into its upper position (to close the poppet valve of the synthetically commutated hydraulic machine 27, for example), the driving electrical coil 52 can be simply switched off (see Fig. 5d). The electric current through the loading coil 53 , however, will remain at its "latched level": This way, the mechanical energy, stored in the energy storage spring 57 will force the driving disk 54 , and therefore the valve stem 51, into its upper position. By using an energy storage spring 57 with a relatively high spring constant, the time necessary for the movement of driving disc 54 can be made very small.

In Fig. 5d, the result of this upward movement of the driving disc 54 is shown. In this position, the valve slit 20 will be closed.

Now, the electric current through the loading coil 53 can be switched off as well, while the loading disc 55 will remain in its upper position. This is because of the biasing force of the biasing spring 58. At some point the fluid pressure differences between cylinder port 9 and low pressure fluid port 10 will open the valve, thus moving driving disc 54 to its lower position. This way, the tension of the energy storage spring 57 will be increasing. Therefore, the fluid pressure differences between cylinder port 9 and low pressure fluid port 10 are used to load the energy storage spring 57. This way the valve actuator will return to its position, as seen in Fig. 5a, thus completing the actuation cycle.

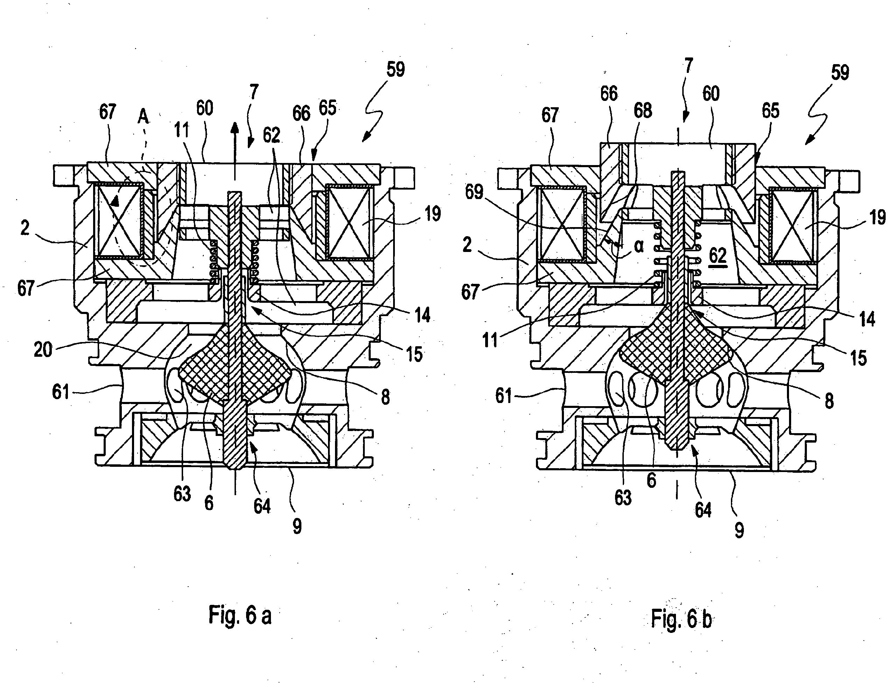

In Fig. 6, a preferred embodiment of a normally closed actuated valve 59 is shown in a schematic cross section. The presently shown normally closed actuated valve 59 is shown in different positions in Figs. 6a and 6b. In figure 6a, the normally closed actuated valve 59 is shown in its open position, while the normally closed actuated valve. 59 is shown in its closed position in Fig. 6b. The basic design idea of the presently shown normally closed actuated valve 59, and the normally closed actuated valve 1 of Fig. 1 is essentially the same. For brevity, similar parts are denoted by the same reference numbers.

Similar to the normally closed actuated valve 1 of Fig. 1, the presently shown normally closed actuated valve 59 is usually designed in an essentially rotationally symmetric way.

The normally closed actuated valve 59 shows a valve body 2 and a movable valve unit 7. The movement of the movable valve unit 7 is initiated by applying an electrical current to the electrical coils 19. If no electrical current is applied to the electrical coils 19, the force exerted by the metal spring 11 pushes the movable valve unit 7 upwards into the closed position of the normally closed actuated valve 59. This closed position is shown in Fig. 6b. As can be seen from the Fig., the valve slit 20 is closed by a direct contact between valve head 6 and valve seat 8, so that the fluid connection between the cylinder port 9 and the low pressure fluid port 60 is closed. As can be seen from Fig. 6, the low-pressure port 60 is arranged at the top of the normally closed actuated valve 59. Accordingly, appropriate parts of the valve body 2 and the movable valve unit 7 are designed with a hollow interior 62. Additionally, the normally closed actuated valve 59 is provided with a high-pressure fluid port 61 that is connected to the cylinder port 9 via a plurality of bores 63. The fluid connection between high-pressure port 61 and cylinder port 9 is established permanently, independent of the position of the movable valve unit 7.

Instead of the plate shaped actuator disc 5 (compare to Fig. 1), the movable valve unit 7 of the normally closed actuated valve 59 is provided with a movable armature part 66. In connection with the fixed armature parts 67 of the valve body 2, the movable armature part 66 forms an armature for the magnetic field lines (symbolised by closed arrow A), generated by the electrical coils 19.

Between the opposing surface parts 68, 69 of the movable armature part 66 and the fixed armature part 67, respectively, the magnetic field generates an attractive force, which moves the movable valve unit 7 into its lower position, when a sufficiently large electrical current is flowing through the electrical coils 19. The lower position of the multiple valve unit 7 corresponds to the open position of the normally closed actuated valve 59, as shown in Fig. 6a.

As can be seen from Fig. 6a and Fig. 6b, the surface parts 68, 69 of the movable armature part 66 and the fixed armature part 67 are inclined. In particular, the surface parts 68, 69 are arranged at an angle α of α=30° in the presently shown embodiment. The angle α is measured between the axial direction of the normally closed actuated valve 59 / movable valve unit 7 and the surface 68, 69 of the respective part itself. Experiments have shown that the inclined arrangement of the surface parts 68, 69 leads to a higher attractive force in the beginning of the movement of the movable valve unit 7 (i.e. if the movable valve unit 7 is in its upper position). This way, the electrical coils 19 can be built smaller (thus reducing the overall volume of the normally closed actuated valve 59) and/or electric energy can be saved, because the necessary electrical current through the electrical coils 19 is lower.

Apart from the first bearing 15, the normally closed actuated valve 59 comprises a second bearing 64 as well as a third bearing 65. The second bearing 64 is provided on the lower end of the movable valve unit 7. A third bearing 65 is provided between the valve body 2 and the movable armature part 66 of the movable valve unit 7.

Additional information, features, possible embodiments and/or possible modifications of the presently described invention can be taken from the description of the patent publication EP-A-2206940 filed by the same applicant on the same date.
The invention is defined by appended claims only.
- 1: normally closed actuated valve
- 2: valve body
- 3: central bore
- 4: valve stem
- 5: plate shaped actuator disc
- 6: valve head
- 7: movable valve unit
- 8: valve seat
- 9: cylinder port
- 10: low pressure fluid port
- 11: metal spring
- 12: first side
- 13: second side
- 14: projections
- 15: bearing
- 16: bearing
- 17: radial surface
- 18: axially projecting ring
- 19: electrical coils
- 20: valve slit
- 21: electrical flash symbol
- 22: graph
- 23: ordinate
- 24: abscissa
- 25: steady-state current
- 26: latching steady-state current
- 27: synthetically commutated hydraulic pump
- 28: cylindrical cavity
- 29: piston
- 30: camshaft
- 31: turning axis
- 32: cyclically changing cavities
- 33: high pressure fluid port
- 34: check valve
- 35: driving circuit
- 36: power supply
- 37: electronic controlling unit
- 38: input port
- 39: output signal
- 40: output signal
- 41: first switch
- 42: second switch
- 43: main current path
- 44: free wheeling diode
- 45: Zener diode
- 46: energy recovering unit
- 47: buffer capacitor
- 48: valve actuator
- 49: driving section
- 50: latching section
- 51: valve stem
- 52: driving electrical coil
- 53: loading electrical coil
- 54: driving disc
- 55: loading disc
- 56: hole
- 57: energy storage spring
- 58: biasing spring
- 59: normally closed actuated valve
- 60: low-pressure port
- 61: high-pressure port
- 62: hollow interior
- 63: opening bore
- 64: second bearing
- 65: third bearing
- 66: movable armature part
- 67: fixed armature part
- 68: surface part of 66
- 69: surface part of 67

## Claims

1. Actuated valve (1, 48), in particular actuated valve (1, 48) for a fluid working machine (27), preferably actuated valve (1, 48) for a synthetically commutated hydraulic machine (27), comprising at least one magnetic field generating device (19, 49, 50) for actuating a valve member (6) of the actuated valve (1, 48), wherein said actuated valve (1, 48) is designed and arranged in a way that the actuated valve (1, 48) is cyclically actuated, wherein the closing movement of said, valve member (6) is at least in part initiated by tuning down and/or switching off said magnetic field generating device (19, 49, 50), further comprising at least one valve closing accelerating means (11, 35, 57, 58), **characterised in that** said valve closing accelerating means (11, 35, 57, 58) comprises at least one mechanical energy-storing unit (11, 57) and at least one driving circuit (35), said driving circuit (35) comprising at least one short-circuiting device (44) and at least one actively controlled regulating device for applying a voltage for cancelling the magnetic field of the magnetic field generating device, or at least one short-circuiting device (44) for cancelling the magnetic field of the magnetic field generating device and an electrical energy-regenerating device (46), or at least one short-circuiting device (44) and at least one actively controlled regulating device for applying a voltage for cancelling the magnetic field of the magnetic field generating device and an electrical energy-regenerating device (46).

2. Actuated valve (1, 48) according to claim 1, **characterised in that** said magnetic field generating device (19, 49, 50) comprises at least one magnetic coil (19, 49, 50).

3. Actuated valve (1, 48) according to claim 1 or 2, **characterized in that** said actuated valve (1, 48) comprises a closing biasing means (58), biasing said valve (6) into its closed position.

4. Actuated valve (1, 48) according to any of the preceding claims, **characterized in that** said actuated valve (1, 48) is designed and arranged in a way that the energy, stored in said at least one mechanical energy storing unit (11, 57), is used for opening and/or closing said actuated valve (6).

5. Actuated valve (1, 48) according to any of the preceding claims, **characterised in that** said mechanical energy-storing unit (11, 57) comprises at least one device, taken from the group containing springs, metal springs, elastic material, rubber, hydraulic energy storage devices and gas pressure elements.

6. Actuated valve (1, 48) according to any of the preceding claims, **characterised in that** said actuated valve (1, 48) comprises a preloading means (50) for preloading said mechanical energy-storing unit (11, 57).

7. Actuated valve (1, 48) according to any of the preceding claims, in particular actuated valve (1, 48) according to claim 6, **characterised in that** said actuated valve (1, 48) comprises at least one second magnetic field generating device (53), wherein preferably said second magnetic field generating device (53) is designed and arranged as said preloading device (50).

8. Actuated valve (1, 48) according to any of the preceding claims, in particular actuated valve (1, 48) according to claim 6 or 7, **characterised in that** said actuated valve (1, 48) comprises at least one fluidly driven actuating device (6), wherein preferably said fluidly driven actuating device (6) is designed and arranged as said preloading device.

9. Fluid working machine (27), **characterised by** at least one actuated valve (1, 48) according to any of claims 1 to 8.

10. Fluid working machine (27) according to claim 9, **characterised in that** said hydraulic working machine is at least partially designed as a synthetically commutated hydraulic machine (27).

11. Fluid working machine (27) according to claim 9 or 10, **characterised in that** said actuated valves (1, 48) are used at least in part as low pressure valves.

12. A process for controlling the at least one actuated valve (1, 48) of a fluid working machine (27) according to any of claims 9 to 11, in particular of a synthetically commutated hydraulic machine (27), wherein the closing movement of at least one of said at least one actuated valve (1, 48) is performed by tuning down and/or switching off the force of at least one force generating device (19, 49, 50) of said at least one actuated valve (1, 48), **characterised in that** the energy stored in said force generating device (19, 49, 50) is at least in part actively tuned down and/or switched off.

13. A process according to claim 12, **characterised in that** at least one of said force generating devices (19, 49, 50) is designed and arranged as a magnetic field generating device (19, 49, 50), in particular as a magnetic coil (19, 49, 50).

14. A process according to claim 12 or 13, **characterised in that** the energy stored in said force generating device (19, 49, 50) is at least partially dissipated and/or regenerated (44, 46) for performing the closing movement of said actuated valve.

## Patentansprüche

1. Betätigtes Ventil (1, 48), insbesondere betätigtes Ventil (1, 48) für eine Fluidarbeitsmaschine (27), vorzugsweise betätigtes Ventil (1, 48) für eine synthetisch kommutierte Hydraulikmaschine (27), aufweisend mindestens eine Magnetfelderzeugungsvorrichtung (19, 49, 50) zum Betätigen eines Ventilglieds (6) des betätigten Ventils (1, 48), wobei das betätigte Ventil (1, 48) derart gestaltet und angeordnet ist, dass das betätigte Ventil (1, 48) zyklisch betätigt wird, wobei die Schließbewegung des Ventilglieds (6) mindestens zum Teil durch Herunterstellen und/oder Abschalten der Magnetfelderzeugungsvorrichtung (19, 49, 50) eingeleitet wird, ferner aufweisend mindestens ein Ventilschließbeschleunigungsmittel (11, 35, 57, 58), **dadurch gekennzeichnet, dass** das Ventilschließbeschleunigungsmittel (11, 35, 57, 58) mindestens eine mechanische Energiespeichereinheit (11, 57) und mindestens einen Antriebskreis (35) aufweist, wobei der Antriebskreis (35) mindestens eine Kurzschlussvorrichtung (44) und mindestens eine aktiv gesteuerte Reguliervorrichtung zum Anlegen einer Spannung zum Aufheben des Magnetfelds der Magnetfelderzeugungsvorrichtung oder mindestens eine Kurzschlussvorrichtung (44) zum Aufheben des Magnetfelds der Magnetfelderzeugungsvorrichtung und eine elektrische Energieregenerationsvorrichtung (46) oder mindestens eine Kurzschlussvorrichtung (44) und mindestens eine aktiv gesteuerte Reguliervorrichtung zum Anlegen einer Spannung zum Aufheben des Magnetfelds der Magnetfelderzeugungsvorrichtung und eine elektrische Energieregenerationsvorrichtung (46) aufweist.

2. Betätigtes Ventil (1, 48) nach Anspruch 1, **dadurch gekennzeichnet, dass** die Magnetfelderzeugungsvorrichtung (19, 49, 50) mindestens eine Magnetspule (19, 49, 50) aufweist.

3. Betätigtes Ventil (1, 48) nach einem der Ansprüche 1 oder 2, **dadurch gekennzeichnet, dass** das betätigte Ventil (1, 48) ein Schließvorspannmittel (58) aufweist, das das Ventil (6) in seine geschlossene Position vorspannt.

4. Betätigtes Ventil (1, 48) nach einem der vorhergehenden Ansprüche, **dadurch gekennzeichnet, dass** das betätigte Ventil (1, 48) derart gestaltet und angeordnet ist, dass die Energie, die in der mindestens einen mechanischen Energiespeichereinheit (11, 57) gespeichert ist, zum Öffnen und/oder Schließen des betätigten Ventils (6) benutzt wird.

5. Betätigtes Ventil (1, 48) nach einem der vorhergehenden Ansprüche, **dadurch gekennzeichnet, dass** die mechanische Energiespeichereinheit (11, 57) mindestens eine Vorrichtung aufweist, die aus der Gruppe entnommen ist, welche Federn, Metallfedern, elastisches Material, Kautschuk, hydraulische Energiespeichervorrichtungen und Gasdruckelemente enthält.

6. Betätigtes Ventil (1, 48) nach einem der vorhergehenden Ansprüche, **dadurch gekennzeichnet, dass** das betätigte Ventil (1, 48) ein Vorbelastungsmittel (50) zum Vorbelasten der mechanischen Energiespeichereinheit (11, 57) aufweist.

7. Betätigtes Ventil (1, 48) nach einem der vorhergehenden Ansprüche, insbesondere betätigtes Ventil (1, 48) nach Anspruch 6, **dadurch gekennzeichnet, dass** das betätigte Ventil (1, 48) mindestens eine zweite Magnetfelderzeugungsvorrichtung (53) aufweist, wobei die zweite Magnetfelderzeugungsvorrichtung (53) vorzugsweise als die Vorbelastungsvorrichtung (50) gestaltet und angeordnet ist.

8. Betätigtes Ventil (1, 48) nach einem der vorhergehenden Ansprüche, insbesondere betätigtes Ventil (1, 48) nach einem der Ansprüche 6 oder 7, **dadurch gekennzeichnet, dass** das betätigte Ventil (1, 48) mindestens eine fluidbetriebene Betätigungsvorrichtung (6) aufweist, wobei die fluidbetriebene Betätigungsvorrichtung (6) vorzugsweise als die Vorbelastungsvorrichtung gestaltet und angeordnet ist.

9. Fluidarbeitsmaschine (27), **gekennzeichnet durch** mindestens ein betätigtes Ventil (1, 48) nach einem der Ansprüche 1 bis 8.

10. Fluidarbeitsmaschine (27) nach Anspruch 9, **dadurch gekennzeichnet, dass** die Hydraulikarbeitsmaschine mindestens zum Teil als synthetisch kommutierte Hydraulikmaschine (27) gestaltet ist.

11. Fluidarbeitsmaschine (27) nach einem der Ansprüche 9 oder 10, **dadurch gekennzeichnet, dass** die betätigten Ventile (1, 48) mindestens zum Teil als Niederdruckventile benutzt sind.

12. Prozess zum Steuern des mindestens einen betätigten Ventils (1, 48) einer Fluidarbeitsmaschine (27) nach einem der Ansprüche 9 bis 11, insbesondere einer synthetisch kommutierten Hydraulikmaschine (27), wobei die Schließbewegung von mindestens einem des mindestens einen betätigten Ventils (1, 48) durch Herunterstellen und/oder Abschalten der Kraft von mindestens einer Krafterzeugungsvorrichtung (19, 49, 50) des mindestens einen betätigten Ventils (1, 48) durchgeführt wird, **dadurch gekennzeichnet, dass** die Energie, die in der Krafterzeugungsvorrichtung (19, 49, 50) gespeichert ist, mindestens zum Teil aktiv heruntergestellt und/oder abgeschaltet wird.

13. Prozess nach Anspruch 12, **dadurch gekennzeichnet, dass** mindestens eine der Krafterzeugungsvorrichtungen (19, 49, 50) als Magnetfelderzeugungsvorrichtung (19, 49, 50), insbesondere als Magnetspule (19, 49, 50), gestaltet und angeordnet ist.

14. Prozess nach einem der Ansprüche 12 oder 13, **dadurch gekennzeichnet, dass** die Energie, die in der Krafterzeugungsvorrichtung (19, 49, 50) gespeichert ist, zum Durchführen der Schließbewegung des betätigten Ventils mindestens zum Teil abgeführt und/oder regeneriert (44, 46) wird.

## Revendications

1. Vanne actionnée (1, 48), en particulier vanne actionnée (1, 48) pour une machine fonctionnant avec un fluide (27), de préférence vanne actionnée (1, 48) pour une machine hydraulique à commutation synthétique (27), comprenant au moins un dispositif de génération de champ magnétique (19, 49, 50) pour actionner un élément de vanne (6) de la vanne actionnée (1, 48), cette vanne actionnée (1, 48) étant conçue et agencée de manière à ce que la vanne actionnée (1, 48) soit actionnée cycliquement, le mouvement de fermeture dudit élément de vanne (6) étant au moins déclenché partiellement en abaissant le réglage du dispositif de génération de champ (19, 49, 50) et/ou en le mettant hors circuit, comprenant en outre au moins un moyen d'accélération de fermeture de vanne (11, 35, 57, 58), **caractérisée en ce que** ledit moyen d'accélération de fermeture de vanne (11, 35, 57, 58) comprend au moins une unité de stockage d'énergie mécanique (11, 57) et au moins un circuit d'attaque (35), ledit circuit d'attaque (35) comprenant au moins un dispositif de court-circuitage (44) et au moins un dispositif de régulation commandé activement pour appliquer une tension pour annuler le champ magnétique du dispositif de génération de champ magnétique, ou au moins un dispositif de court-circuitage (44) pour annuler le champ magnétique du dispositif de génération de champ magnétique et un dispositif de régénération d'énergie électrique (46), ou au moins un dispositif de court-circuitage (44) et au moins un dispositif de régulation commandé activement pour appliquer une tension pour annuler le champ magnétique du dispositif de génération de champ magnétique et un dispositif de régénération d'énergie électrique (46).

2. Vanne actionnée (1, 48) selon la revendication 1, **caractérisée en ce que** ledit dispositif de génération de champ magnétique (19, 49, 50) comprend au moins une bobine magnétique (19, 49, 50).

3. Vanne actionnée (1, 48) selon la revendication 1 ou 2, **caractérisée en ce que** ladite vanne actionnée (1, 48) comprend un moyen de sollicitation de fermeture (58), sollicitant ladite vanne (6) dans sa position fermée.

4. Vanne actionnée (1, 48) selon l'une quelconque des revendications précédentes, **caractérisée en ce que** ladite vanne actionnée (1, 48) est conçue et agencée de façon à ce que l'énergie, stockée dans ladite au moins une unité de stockage d'énergie mécanique (11, 57), soit utilisée pour ouvrir et/ou fermer ladite vanne actionnée (6).

5. Vanne actionnée (1, 48) selon l'une quelconque des revendications précédentes, **caractérisée en ce que** ladite unité de stockage d'énergie mécanique (11, 57) comprend au moins un dispositif, pris parmi le groupe comprenant les ressorts, les ressorts métalliques, les matériaux élastiques, le caoutchouc, les dispositifs de stockage d'énergie hydraulique et les éléments à pression de gaz.

6. Vanne actionnée (1, 48) selon l'une quelconque des revendications précédentes, **caractérisée en ce que** ladite vanne actionnée (1, 48) comprend un moyen de préchargement (50) pour précharger ladite unité de stockage d'énergie mécanique (11, 57).

7. Vanne actionnée (1, 48) selon l'une quelconque des revendications précédentes, en particulier vanne actionnée (1, 48) selon la revendication 6, **caractérisée en ce que** ladite vanne actionnée (1, 48) comprend au moins un deuxième dispositif de génération de champ magnétique (53), ledit deuxième dispositif de génération de champ magnétique (53) étant de préférence conçu et agencé comme ledit dispositif de préchargement (50).

8. Vanne actionnée (1, 48) selon l'une quelconque des revendications précédentes, en particulier vanne actionnée (1, 48) selon la revendication 6 ou 7, **caractérisée en ce que** ladite vanne actionnée (1, 48) comprend au moins un dispositif d'actionnement entraîné par fluide (6), ledit dispositif d'actionnement entraîné par fluide (6) étant de préférence conçu et agencé comme ledit dispositif de préchargement.

9. Machine fonctionnant avec un fluide (27), **caractérisée par** au moins une vanne actionnée (1, 48) selon l'une quelconque des revendications 1 à 8.

10. Machine fonctionnant avec un fluide (27), selon la revendication 9, **caractérisée en ce que** ladite machine hydraulique est conçue au moins partiellement comme une machine hydraulique à commutation synthétique (27).

11. Machine fonctionnant avec un fluide (27), selon la revendication 9 ou 10, **caractérisée en ce que** lesdites vannes actionnées (1, 48) sont utilisées au moins partiellement comme des vannes à basse pression.

12. Procédé pour commander l'au moins une vanne actionnée (1, 48) d'une machine fonctionnant avec un fluide (27) selon l'une quelconque des revendications 9 à 11, en particulier d'une machine hydraulique à commutation synthétique (27), dans lequel le mouvement de fermeture d'au moins une de ladite au moins une vanne actionnée (1, 48) est exécuté en abaissant et/ou en arrêtant la force d'au moins un dispositif de génération de force (19, 49, 50) de ladite au moins une vanne actionnée (1, 48), **caractérisé en ce que** l'énergie stockée dans ledit dispositif de génération de force (19, 49, 50) est au moins partiellement abaissée activement et/ou arrêtée.

13. Procédé selon la revendication 12, **caractérisé en ce qu'**au moins un desdits dispositifs de génération de force (19, 49, 50) est conçu et agencé comme un dispositif de génération de champ magnétique (19, 49, 50), en particulier comme une bobine magnétique (19, 49, 50).

14. Procédé selon la revendication 12 ou 13, **caractérisé en ce que** l'énergie stockée dans ledit dispositif de génération de force (19, 49, 50) est au moins partiellement dissipée et/ou régénérée (44, 46) pour exécuter le mouvement de fermeture de ladite vanne actionnée.
